# EUROPEAN PATENT SPECIFICATION

(11) **EP 4 529 776 B1**
(45) Date of publication and mention of the grant of the patent: **15.10.2025**
(21) Application number: 23306618.2
(22) Date of filing: 27.09.2023
(51) Int. Cl.: A23K 20/158, C11B 13/00

(54) **DEVICE AND METHOD FOR EXTRACTING FAT FROM AN ORGANIC SOUP**
VORRICHTUNG UND VERFAHREN ZUR EXTRAKTION VON FETT AUS EINER ORGANISCHEN SUPPE
DISPOSITIF ET PROCÉDÉ D'EXTRACTION DE GRAISSE D'UNE SOUPE ORGANIQUE

(43) Date of publication of application: 02.04.2025
(73) Proprietor: Saria International GmbH, 59379 Selm (DE)
(72) Inventor: Kassebaum, Frank, 32584 Löhne (DE); Grüßing, Thomas, 98597 Breitungen (DE)
(74) Representative: Casalonga

(56) References cited:
- EP-A1- 0 926 230
- CN-A- 101 626 817
- CN-A- 104 651 413
- US-A- 4 938 876
- US-A1- 2020 113 186
- US-B2- 11 118 133
- US-B2- 8 877 992

## Description

### FIELD OF THE INVENTION

The present invention belongs to the field of biowaste valorization and more particularly to a device and process for extracting fat from an organic soup obtained from any type of biowaste.

### BACKGROUND OF THE INVENTION

Being able to create a circular economy without waste is a goal of policy makers. As the world population and waste production rates are expected to keep rising during the following years, the development and selection of sustainable waste management solutions becomes more and more pressing.

In light of the volume of organic waste being generated, the use of better strategies for its management is seen as part of the solution to this pressing problem.

Waste valorization is a strategy to improve current waste management practices and is being studied and applied with increasing interest to organic waste fractions, including food waste.

Generally speaking, waste valorization is the process of reusing, recycling or composting waste materials and converting them into more useful products including materials, chemicals, fuels or other sources of energy. As such, valorization adds economic value to waste while reducing the volume of waste that ends up in landfills or incineration which, until now, represented the way in which a large part of the organic waste were disposed of.

Landfilling is the process of burying waste in a landfill. Landfilling can cause environmentally unacceptable pollution discharges to the water and, as real estate values increase, it is considered to be an unattractive use of land. This method additionally contributes to greenhouse emissions by releasing methane. Thus, current waste management strategies seek to limit the amount of wastes directed to landfills.

Incinerators, or waste-to-energy plants, are waste management facilities where material is burnt to create energy. Although efforts are made to separate out hazardous materials from the waste stream, these plants have had a history of emissions and operational problems related to contaminants. The residual ash created from this burning has also, in some cases, been found to be hazardous.

From the above, it appears that waste management in general (including organic waste management) presents significant problems.

As mentioned above, one possible solution to this problem is the development of strategies for the valorization of organic waste.

One such strategy is the development of anaerobic digestion plants, based on the process of anaerobic digestion, also called "methanization" (for a definition of the term see, for example, the "Biogas production and biogas potentials from residues of the European food and beverage industry", European Biogas Association (EBA), 2015). Thanks to this process, it is possible to extract value from the organic fraction of organic waste and take advantage of this resource for the production of renewable energy and fertilizers.

In fact, the primary objective of anaerobic digestion is the production of a mixture of hydrocarbon gases, referred to as biogas, which may be utilized as an energy source to generate electricity and/or heat. Any solid material remaining at the completion of the anaerobic digestion process is typically disposed of by conventional landfilling or composted into the soil.

Another strategy for the valorization of organic waste is the extraction of fat and its subsequent use, for example, in the production of biofuels. The market of biofuel produced from material not competing with food usage is growing. The Directive (EU) 2018/2001 of the European Parliament and of the Council of December 11, 2018 on the promotion of the use of energy produced from renewable sources called "EnR2" or "RED II" published on December 21, 2018 (and entered into force on July 1, 2021) notably sets a renewable energy target of 14% in the transport sector by 2030 with a cap of 7% for first-generation biofuels.

This directive and other relevant regulations concern all transport means, including the air sector for which biofuels (biojet, biokerosene or Sustainable Aviation Fuel, or SAF) can be incorporated up to 50% in fossil kerosene. The use of these biofuels represents an important lever for reducing greenhouse gas emissions generated by this high-emitting sector.

The various regulations give priority to the development of advanced biofuels and encourage the use of varied and renewable resources to avoid competition with production for food purposes.

Devices and methods for the extraction of fat have already been described in the art, for example in EP2099887 and WO2014/067908. However, to date, no devices and methods for fat extraction on all types of organic waste material have been disclosed, let alone the use of the obtained fat as biofuels (or for any other application). For example, in WO2014/067908, the biomass must be sorted and segregated according to its nature so that each category of waste is treated independently (the waste must therefore be collected separately). Also, overly complex biological waste cannot be defatted and are sent directly to a plant for anaerobic digestion to produce biogas. In addition, no reference to the use of the extracted fat is made.

US4,938,876 discloses a process and apparatus for continuously separating oil, water and solids from emulsions, comprising heating the mixture to at least about 115° C, rapidly cooling the mixture to below about 100° C, separating the solids from the liquids and separating the water from the oil. This process is limited to the recycling of waste oil and not adapted for extracting fat from any organic soup.

CN104651413A describes a method for recycling kitchen waste, comprising a step a step of removing non-biodegradable solid particles and fat from the food waste. The fat is removed by merely heating the hydraulically separated material to melt out the fat in the material, and then performing air flotation degreasing. The resulting material is further processed to obtain a slurry material which is used to obtain biogas by anaerobic digestion.

Hence, further improvements for fat extraction from organic waste are required.

In general, the main problems of the current methods for fat extraction are:
- the quality of the final fat, which needs to contain a very low level of inert particles and other foreign bodies and also needs to comply with the SAF manufacturers specifications;
- the need to develop a process allowing fat extraction from all types of organic waste.

Given the above-mentioned limitations of the current systems for the extraction of fat from organic waste, the technical problem at the basis of the present invention is the provision of a method for obtaining an advanced technical fat from all types of organic waste.

To this end, the present invention concerns novel and efficient devices and methods for extracting fat from an organic soup from all types of organic waste.

### SUMMARY OF THE INVENTION

According to a first aspect, the present invention pertains to a device for extracting fat from an organic soup, comprising:
a) a phase separator module configured to separate fat from materials of higher density present in the organic soup;
b) a light residues separation module, connected to the module of point a), comprising:
   i. a first physical separation device configured to separate the light residues from the fat,
   ii. a press configured to apply a pressure onto the light residues to collect the residual fat, or a second physical separation device, and means to convey the residual fat back to the phase separator module, and
c) a storage and sedimentation module, configured to allow the separation of fat from the residual fraction.

According to a second aspect, the preceding device is connected downstream of an apparatus for preparing an organic soup from organic waste material(s) and/or upstream of an anaerobic digester.

According to specific embodiments, the phase separator module comprises a centrifugal decanter or tricanter.

The present invention also concerns a process for the treatment of organic waste according to claim 6.

According to the invention, the step of extracting fat from an organic soup comprises:
a) separating fat from materials of higher density present in the organic soup by introducing the organic soup, previously heated at a temperature above 45°C, into a phase separator module as previously defined,
b) separating the light residues from the fat by means of a press or of another physical separation device, recovering the fat from the separated light residues and sending it back to the separation step in a), and
c) sedimenting the fat obtained in b) to separate it from the residual fraction.

According to an even more particular aspect, the present invention concerns the preceding method, wherein the yield of fat extraction is of at least 75%, preferably 80%, more preferably 90%.

The present disclosure also pertains to the use of the preceding methods, for obtaining fat that is appropriate for use in biofuel industry, chemical industry, animal feed manufacturing, agriculture and energy production. In particular, the present invention pertains to the use of these methods for obtaining fat having a composition that complies with the SAF manufacturers specifications.

### FIGURE LEGENDS

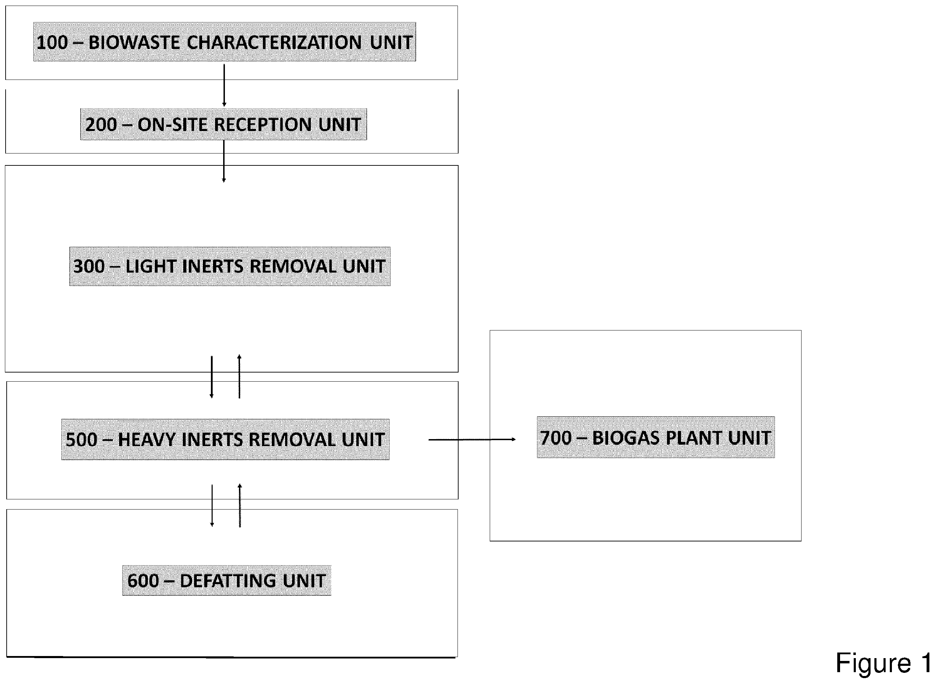

**Figure 1****:** Schematic representation, in the form of a flowchart, of a device for extracting fat from an organic soup according to one embodiment of the present invention. According to such embodiment, the device for extracting fat (i.e., the DEFATTING UNIT) is connected to a device for preparing an organic soup from organic waste material(s) and to an anaerobic digester, and the connections are as indicated in the Figure. According to other embodiments, however, the device for extracting fat can be connected in alternative manners to the device for preparing an organic soup from organic waste material(s) and/or to the anaerobic digester, or it can exist as an independent unit.

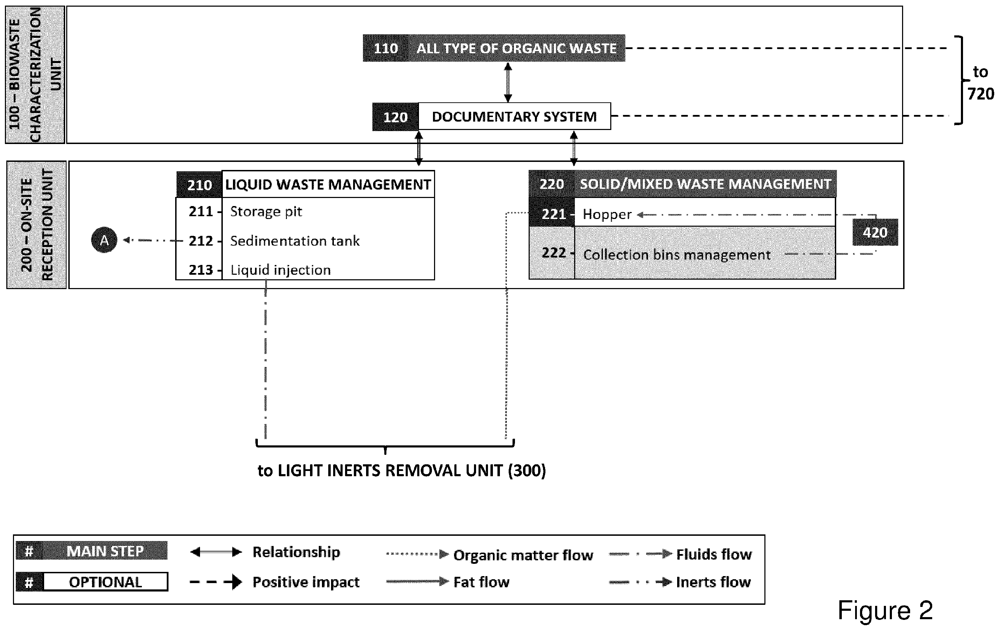

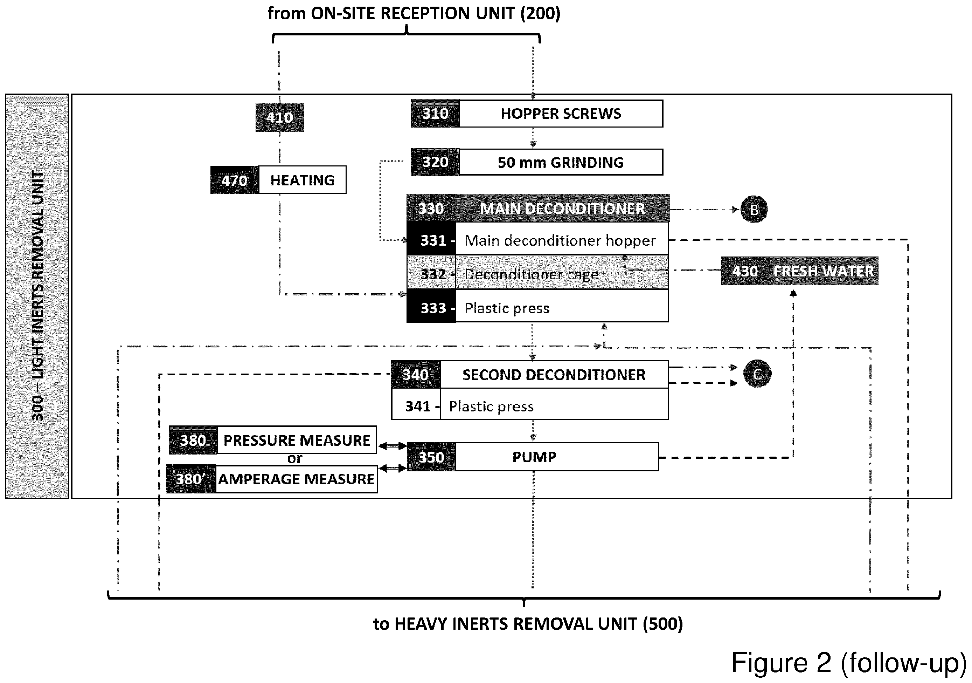

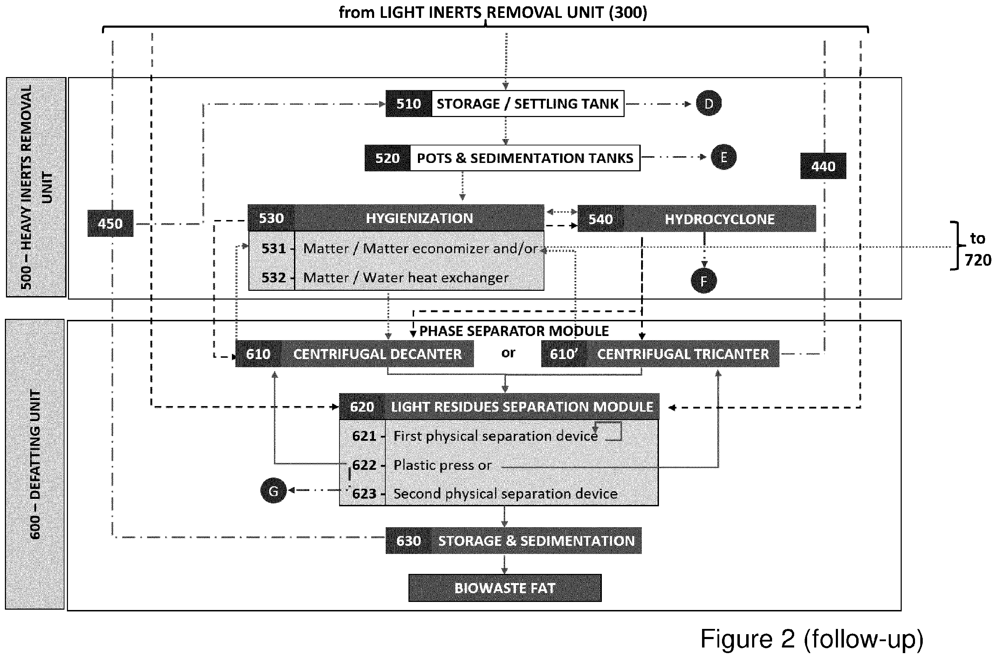

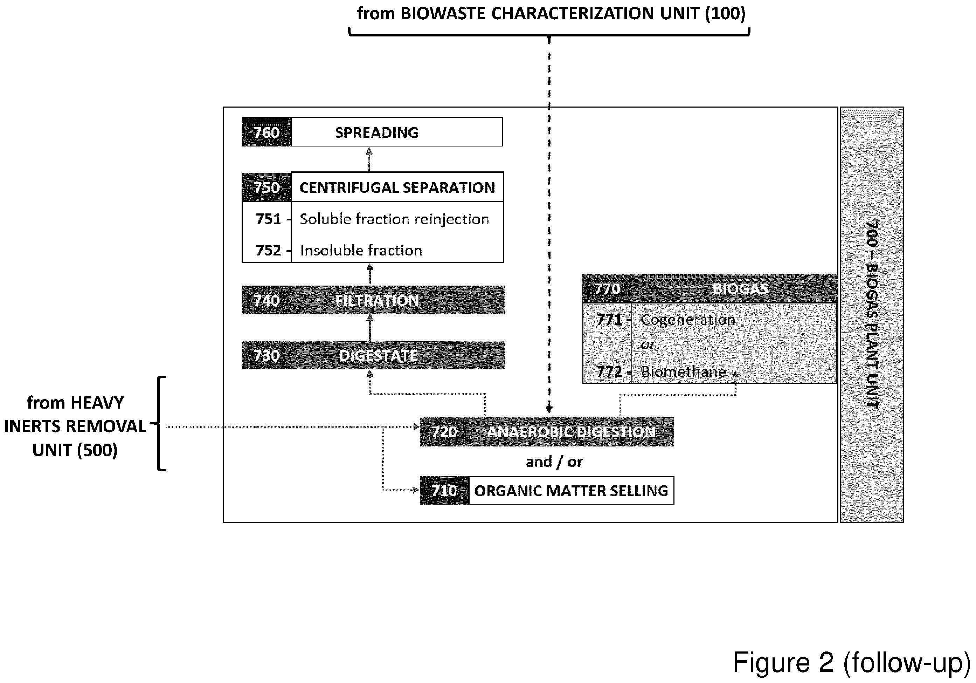

**Figure 2****:** More detailed representation of the flowchart of Figure 1.

### DETAILED DESCRIPTION

As used herein, the terms "comprise", or variations such as "comprises" or "comprising" as well as "including" and variations such as "include", "includes," and "included", are not limiting.

As used herein, the singular form "a", "an" and "the" include singular and plural references unless the context indicates otherwise.

As used herein, the term "and/or", e.g., "X and/or Y" shall be understood to mean either "X and Y" or "X or Y" and shall be taken to provide explicit support for both meanings or for either meaning.

The term "about" when used before a numerical value indicates that the value may vary within reasonable range, such as ± 10%, ± 5%, and ± 1%. The expression "about x" includes the value "x."

In the present text, the percentage of inerts within e.g., an organic matter or an organic soup, is expressed as the ratio between the total mass of the inert components and the mass of the dry matter multiplied by 100.

As used herein, the terms 'essentially composed of', 'consisting essentially of', 'consist essentially of' and 'comprising substantially' mean that specific further components can be present, namely those not materially affecting the essential characteristics of the mixture or composition. For example, a composition, phase, liquid or organic soup consisting essentially of the elements as defined herein would not exclude other elements that do not materially affect the basic characteristic(s) of the present invention.

As used herein, the terms 'organic waste material(s)', 'organic waste material', 'organic waste', 'biowaste' or 'biodegradable waste' refer to at least partially biodegradable wastes, i.e., at least part of which can be decomposed by, e.g., microorganisms during anaerobic digestion. Organic waste materials of any fat content can be processed according to the invention. Examples of organic waste materials include vegetable wastes (e.g., crop residue, kitchen waste, green market waste, forest biomass, roadside vegetation, and aquatic plant biomass), animal wastes (e.g., urine, poultry excrete, fish), animal by-products (e.g., slaughterhouse waste, catering waste, fallen stock, manure, eggshells, feathers), waste from any industry producing organic waste that is not dangerous, such as waste from food and feed industries, and solid municipal waste (e.g., city garbage, biogas slurry, sewage, sugar industry, paper mill waste).

As used herein, the terms "waste deconditioning", "biowaste deconditioning", "deconditioning", "waste treatment", "biowaste treatment" and "treatment" refer to the steps required to treat the collected biowaste to separate the packaging from the organic fraction and to process the recovered organic fraction to obtain an organic soup. The skilled person knows the methods and devices for waste deconditioning that are disclosed in the relevant prior art.

The term 'organic soup' refers to a composition obtained from organic waste material(s) that is disclosed in a number of prior art references. The skilled person knows the relevant prior art and the methods for obtaining an organic soup disclosed therein. Depending on the prior art reference, other terms can be used such as soup, pulp, bio-pulp *etc.,* which are to be considered as synonyms. According to a preferred way of implementation, the organic soup is prepared from organic waste material(s), according to a method comprising the collection, selection and dosing of the input waste materials; the removal of packaging and other light inert residues from the organic matter; and the removal of heavy particles. An additional hygienization step may also be part of the method. The composition of the organic soup and its physico-chemical and biological properties (e.g., dry-matter content, percentage of inert particles, Biochemical Methane Potential (BMP), *etc*.) can significantly vary as a function of the input waste material(s) and of the precise steps carried out to obtain it. According to a particular embodiment, the organic soup contains no more than 0.3% of inert particles, preferably no more than 0.1% and even more preferably no more than 0.05%. According to another particular embodiment, the organic soup has a dry matter content between 5 and 30%.

In the present text, the terms 'organic matter' or 'organic materials' are distinguished from the term 'organic soup' and are used to describe the intermediate products obtained during the different steps of the deconditioning process.

As used herein, the term 'inerts' means those components that cannot be digested by microorganisms present in an anaerobic digester. The amount of inerts varies as a function of the nature of the waste. Being undigestible, inert components are often composed of inorganic materials. The term 'inert' as used in the present text can refer to small particles as well as to larger foreign bodies, residues or fragments of inert materials.

As used herein, the terms 'light' and 'heavy' used in association with, e.g., the terms 'residues' or 'particles' as in, for example, 'light residues', indicate a property of said residues/particles which essentially depends upon their density. For example, paper, cardboard, plastics are to be considered as 'light residues', while sand, stones, shells, sediments, glass and metal pieces are to be considered as 'heavy residues'. The skilled person knows how to distinguish and separate 'light residues' from 'heavy residues' based, e.g., on their density, and by using the techniques known in the art for determining the density or any other relevant property connected to it.

As used herein, the terms 'configured for' or 'configured to' are used to specify that a certain part of an apparatus, e.g., a module or a unit, has the specific function for which it has been set up or arranged. For example, the expression "the phase separator module is *configured to* separate a fraction composed of fat and light residues from the other materials of the organic soup" means that the function of the phase separator module is to perform the separation of a fraction composed of fat and light residues (with lower density than water such as, for example, plastic residues) from the other materials of the organic soup, and that it is appropriate to do it.

Other definitions will be specified below, when necessary.

According to a first aspect, the present invention pertains to a device for extracting fat from an organic soup, comprising:
a) a phase separator module (610 or 610') configured to separate fat from materials of higher density present in the organic soup;
b) a light residues separation module (620), connected to the module of point a), comprising:
   i) a first physical separation device (621) configured to separate the light residues from the fat,
   ii) a press (622) configured to apply a pressure onto the light residues to collect the residual fat, or a second physical separation device (623), and means to convey the residual fat back to the phase separator module, and
c) a storage and sedimentation module (630), configured to allow the separation of fat from the residual fraction.

The above device is referred to as DEFATTING UNIT in the present text.

The term 'fat' is used herein as usually understood by the skilled person and includes compounds such as any ester of fatty acids, or fatty acids compounds or a mixture of such compounds, as well as mono-di-triglycerides and free fatty acids. The term fat also includes saturated fat, unsaturated (oil), or grease or a mixture of both. The sources of the fat can be any, e.g., vegetable oils, animal tissues, dairy products *etc.*

As used herein, the term 'phase separator module' refers to any module whose function is to separate fat from materials of higher density present in the organic soup. The materials of higher density are hereinafter referred to as 'defatted organic soup'.

The separation is based on the density difference between fat and the rest of the organic soup. However, since fat and light residues have similar densities, light residues are retained in the fat fraction obtained after the organic soup has passed through the phase separator module.

To improve the quality of the fat so that it can be directly used, e.g., as a biofuel, the light residues need to be removed.

To this aim, the present invention makes use of an additional module, referred to as 'light residues separation module' (620).

The light residues separation module according to the invention comprises a first physical separation device, configured to separate the light residues from fat. According to the invention, the first physical separation device (621) is preferably a drum sieve, for example a drum sieve with a mesh size of about 10 mm. According to a particular embodiment, the fat is injected into the drum sieve at a volume flow rate of about 0,2 - 5 m³/hour.

Optionally, at the output of the light residues separation module, part of the filtered fat is recirculated on the first physical separation device (e.g., a drum sieve) to improve separation.

The light residues separation module according to the invention may further comprise a press (622) configured to apply a pressure onto the residual light residues to collect the residual fat (Figure 2, (G)), or a second physical separation device (623) such as a centrifugation device. The use of such a press can yield about 30 to 300 litres of fat for 1m³ of pressed light residues. A centrifugal separation can achieve even better fat/plastic separation efficiency. Hence, a press or centrifugation device allows to further increase the fat extraction yield. Such extraction yield depends on the performance of the at least one deconditioner module. In fact, an efficient deconditioning with the at least one deconditioner module allows to obtain an organic matter with a low content of light residues. Having less light residues in the organic matter translates into less fat trapped in such residues.

In addition, fat from the physical separation device (621) can recirculate onto the phase separator module itself ((610) or (610')) with the aim to increase the fat content of the organic matter by increasing the fat content in the soup at the entry of the phase separator module, thus improving the extraction. This also helps to maintain good fluidity in the phase separator module.

According to the device of the invention, the light residues separation module is connected to a 'storage and sedimentation module'.

As used herein, the term 'storage and sedimentation module' refers to any module whose function is to allow the separation of fat from the residual heavier fraction.

The storage and sedimentation module (630) according to the invention may comprise, for example, one or more tanks with conical bottoms, where the fat may reside for a variable time, e.g. 24 hours. After this separation time in the tank(s), the lowest part of the tank(s), where water and sediments have accumulated, can be conveyed to a deconditioner module (via connection 450) or to a storage tank before hygienization, and the fat can be directly used as biofuel, further processed in a predictable way to obtain a predictable biofuel with the required characteristics or used for other applications.

According to a specific embodiment, the preceding device can be connected downstream of an apparatus for preparing an organic soup from organic waste material(s) and/or upstream of an anaerobic digester.

In what precedes, an apparatus for preparing an organic soup from organic waste material(s) designates any device appropriate for deconditioning organic wastes, i.e., for removing the packaging and other inerts from the organic fraction of the waste. Herein, inerts refer to both light and heavy inerts as defined above. Examples of such devices are described in EP3381575A1 and US7955839B2.

According to a particular embodiment, the device for extracting fat from an organic soup is connected to an hygienization module, which can be part of the device for preparing an organic soup from organic waste material(s). By doing so, the organic soup is at a temperature of at least 45°C when it enters into the DEFATTING UNIT (except if there is significant heat dispersion within the device, in which case the organic soup can be re(heated)), which allows for an improved fat extraction.

The hygienization module may optionally be non-existent or placed after the DEFATTING UNIT. In this case, a heating system makes it possible to reach the right temperature at the inlet of the DEFATTING UNIT.

According to another particular embodiment, the apparatus for preparing an organic soup from organic waste material(s) comprises means for reducing the content of heavy inerts, for example settling tanks (Figure 2, (D)), sedimentation tanks (Figure 2, (E)), sedimentation pots (Figure 2, (E)) and/or one or more hydrocyclones (Figure 2, (F)). Such elimination of heavy inerts that may be present in the organic waste material(s) prevents clogging and abrasion of the device for fat extraction.

According to another particular embodiment, the apparatus for preparing an organic soup from organic waste material(s) comprises means for grinding the organic matter after removal of the packaging materials and of the light particles and before hygienization, to obtain particles having a diameter equal or inferior to about 12mm. This makes fat more easily accessible, which facilitates its extraction.

In what precedes, an anaerobic digester (also referred to as 'digester') designates a closed tank free from oxygen and comprising methane-producing microorganisms. Such a device is described, for example, in the "Microbiological Handbook for Biogas Plants", 2009 (pages 26-27).

As shown in the experimental part below, the Biochemical Methane Potential (BMP) of the defatted organic soup is slightly inferior to the BMP of the organic soup before defatting. Thus, the amount of biogas obtainable through anaerobic digestion of the defatted organic soup is lower than the amount of biogas that can be obtained from the same organic soup before defatting. However, the lower yield of anaerobic digestion is more than offset by the value of the recovered fat, so that the combined value of the recovered fat and of the biogas obtained from the digestion of the defatted organic soup surpasses the value of the sole biogas obtainable from a non-defatted organic soup.

More generally, the device for extracting fat from an organic soup can be connected to a device for preparing an organic soup from organic waste material(s) and/or to an anaerobic digester. In this case, the device for extracting fat:
- can be connected as illustrated in Figures 1 and 2, or
- can be connected in a way that is different from the one that is illustrated in Figures 1 and 2. Based on the goal that the skilled person wants to achieve, he/she will be able to connect the device for extracting fat to other units and/or modules in a different way.

Alternatively, the device for extracting fat from an organic soup can exist as an independent unit, i.e. as a unit which is not connected to other units and/or modules as indicated in Figures 1 and 2.

According to a specific embodiment, the phase separator module (610) comprises a decanter, e.g., a centrifugal decanter.

According to this aspect of the invention, the centrifugal decanter is fed with an organic soup, preferably with a warm organic soup (such as an organic soup just hygienized).

According to a particular embodiment, the centrifugal decanter is fed with a warm organic matter at a volume flow rate of about 5-25 m³/hour.

The capacity of the centrifugal decanter in terms of organic matter that it can receive and treat depends, among other factors, on the treatment capacity of the device where it is installed (which, in turn, depends on the size of the plant). The skilled person knows how to adapt the volume flow rate of the organic soup at the inlet of a centrifugal decanter, based on the treatment capacity of the device where it is installed.

For a specific way of implementation of a centrifugal decanter according to the invention, reference is made to Example 1 of the present text.

The centrifugal decanter separates the organic soup in a first phase essentially composed of fat, light residues (e.g., plastic residues) and water (up to about 5% of water may be present) and a second phase composed of defatted organic soup.

During this operation, water is being drawn into the fat-containing phase. This causes the defatted organic soup to lose its fluidity and makes it more difficult to pump it. According to the invention, water is dosed and added to the defatted organic soup to achieve good fluidity. The importance of correctly dosing water is due to the fact that such water is of no interest for the rest of the process and might therefore represent an additional and unnecessary cost for the operation of the device.

According to a specific embodiment, the device according to the present invention comprises a metering valve configured to dose the water to be added to the defatted organic soup so that its fluidity is appropriate for its pumping.

According to this aspect, the device of the invention comprises a system for regulating a metering valve by measuring pressure or electric current intensity to ensure the correct dosage of water.

It is important to note that the addition of water is not always necessary when the phase separator module is a centrifugal decanter, and depends on the pressure value exerted by the fluid on the pumps. Therefore, the addition of water is not compulsory but, in case an addition is required to reduce the pression exerted by the fluid on the pumps, it is performed in a controlled way by a metering valve.

According to a specific embodiment, the preceding device includes a phase separator module (610 or 610') comprising a centrifugal tricanter.

According to this aspect of the invention, a centrifugal tricanter (610') is used instead of a centrifugal decanter. The centrifugal tricanter separates the organic soup in three phases: a first phase essentially composed of fat and light residues (hereinafter called the 'fat phase'), a second phase essentially composed of water and soluble organic matter (referred to as the 'water-soluble' fraction) and a third phase essentially composed of water-insoluble organic matter (referred to as the 'water-insoluble' fraction). The water-insoluble fraction comprises solid particles having a diameter less than about 12mm such as, for example, organic particles derived from food waste of different nature (e.g., fruit pulp, pieces of other types of leftover food, *etc*).

The use of a tricanter makes it possible to obtain an almost pure fat phase (after extraction of the light residues such as plastic residues). In fact, as opposed to the case where a centrifugal decanter is used, water is not drawn into the fat phase. In addition, the fact that water is not drawn into the fat phase reduces the risk that the defatted organic soup loses its fluidity and allows therefore to extract more fat. Hence, addition of water to improve the fluidity of the defatted organic soup is not required in this embodiment.

According to still another aspect, the present invention pertains to a process for the treatment of organic waste, comprising a step of extracting fat from an organic soup produced from said organic waste and a step of methanization of the defatted soup to produce a biogas.

According to this aspect of the invention, an organic soup is first used for extracting fat therefrom, after which the obtained defatted organic soup is used for producing biogas and digestate through methanization.

It may be necessary to cool the defatted organic soup down before it is conveyed to the anaerobic digester, to avoid a negative impact on the microorganisms present in the digester. The temperature of the defatted soup to be sent to the digester is thus adjusted as a function of the type of microorganisms present in the digester (e.g. mesophiles or thermophiles). If the temperature of the defatted organic soup at the outlet of the phase separator module (610 or 610') needs to be adjusted, a system for heat exchange can be used. Advantageously, the heat exchanger is part of a device for preparing the organic soup from organic waste material(s), as shown in Figure 2 (heat exchangers (531 and 532)). Said system allows cooling down the defatted organic soup by using a fluid at a different temperature. The fluid can be any fluid deriving from other steps carried out by the device according to the invention.

The biogas can be used as fuel, in combined heat and power gas engines or upgraded to natural gas-quality biomethane. Methanization also produces a digestate, which can be used, for example, as a fertilizer.

In the process according to the invention, the step of extracting fat from an organic soup comprises:
a) separating fat from materials of higher density present in the organic soup by introducing the organic soup, previously heated at a temperature above 45°C, into a phase separator module,
b) separating the light residues from the fat by means of a press (622) or of a second physical separation device (623), recovering the fat from the separated light residues and sending it back to the separation step in a), and
c) sedimenting the fat obtained in b) to separate it from the residual fraction.

According to the invention, the temperature of the organic soup in step a) is above 45°C, preferably above 70°C, even more preferably above 90°C, so as to facilitate fat extraction.

Heating of the organic soup at a temperature above 45°C is preferably performed via an hygienization module, which can be part of a device for preparing an organic soup from organic waste material(s).

If the organic soup has been heated, e.g. via an hygienization module, its temperature may decrease before it reaches the DEFATTING UNIT because of inevitable heat dispersion within the device. Therefore, to improve fat extraction, the organic soup can be (re)heated above 70°C before entering into the DEFATTING UNIT.

According to a particular embodiment, the phase separator module of step a), defined above, comprises a centrifugal decanter or tricanter.

The dry matter content of the organic soup at the outlet of the phase separator module (610 or 610') is preferably between about 15 and 20%. The preferred lower limit of about 15% allows good pumping and the inventors found it to be optimal for the anaerobic activity of the microorganisms used for anaerobic digestion. The preferred upper limit of about 20% has been found by the inventors to be compatible with the defatting process. The inventors also found that it does not affect the defatting yield of said process. Dry matter contents of about 20% might be preferred in cases where, for example, the methanization is done on a site different from the site where the deconditioning and defatting are performed. In such cases, it is advantageous to achieve dry matter contents of about 20% to reduce the costs of sending the defatted organic soup to the methanization site.

In the process of fat extraction according to the invention, only the fat is extracted. As shown in Example 2, the values of parameters such as the concentration of proteins, the presence of fibers, ashes *etc.* measured in the organic soup before hygienization and after hygienization and defatting are not impacted.

The fat obtainable with the process according to the present invention can have multiple destinations.

According to a more specific embodiment, the present invention pertains to the preceding process, wherein the separation module comprises a tricanter, so that step a) results in the separation of three phases: (i) fat and light residues, (ii) water-soluble fraction and (iii) water-insoluble fraction.

The organic content of the water-soluble fraction is still high because through defatting only fat is extracted, so that all the other organic compounds present in the organic soup before are also present after fat extraction.

The high organic content of the water-soluble fraction is responsible for the significant Biochemical Methane Potential (BMP) of said fraction.

As used herein, the term 'Biochemical Methane Potential' or 'BMP' or 'methanogenic potential' indicates the maximum amount of methane that an organic substrate such as an organic soup can generate during anaerobic digestion.

As shown in the experimental part below (Example 2), the BMP of an organic soup after hygienization and defatting is still high when compared to the BMP of the same organic soup before hygienization.

In fact, the BMP after defatting shows that the defatted organic soup can advantageously be treated by anaerobic digestion. Therefore, the high BMP of the water-soluble fraction can conveniently be exploited for the production of biogas and digestate in an apparatus for anaerobic digestion.

It is also to be noted that, as shown in the experimental part below (Example 2), the residual fat content of the defatted organic soup is <1%. Such residual fat content of the defatted organic soup does not depend on the type of the initial biowaste and on the extraction yield of the defatting process. This means that, even if the nature or content or physical contaminants of biowaste change (for example, its fat content) and the extraction yield is modulated depending on the specific applications, the residual fat in the defatted organic soup obtained with the method according to the invention is rather constant and lower than 1%. The use of a centrifugal tricanter instead of a centrifugal decanter makes it possible to reach even lower residual fat contents of the defatted organic soup (<0.6%).

According to an even more specific embodiment, the present invention pertains to the preceding process, further comprising a step of mixing the water-insoluble fraction with part of the water-soluble fraction at the outlet of the tricanter to reach 20% dry matter.

Contrary to a decanter, the use of a tricanter allows to separate the organic soup to obtain a water-insoluble fraction. Part or all of this fraction can be mixed with part of the water-soluble fraction to reach a dry matter content of about 20%. Working with a defatted organic matter having a dry matter content of about 20% can be advantageous. For example, if the defatted organic matter is to be sent to a unit for anaerobic digestion, the higher dry matter content allows to increase the treatment capacity (i.e., the quantity of organic matter that the digester can treat at the same time) of the anaerobic digester, without changing the size (or any other characteristics) of the digester itself. As mentioned above, using a defatted organic matter having a dry matter content of about 20% can also be an advantage in cases where, for example, the methanization is done on a site different from the site where the defatting is performed.

After the water-insoluble fraction has been mixed with part of the water-soluble fraction at the outlet of the tricanter, the resulting mix can be conveyed to an apparatus for anaerobic digestion, e.g. *via* a system for heat exchange as mentioned above.

The rest of the water-soluble fraction can be returned to a deconditioner module that can be part of a device for preparing an organic soup from organic waste material(s). This can be done via an appropriate liquid flow (440) connecting the centrifugal tricanter to said deconditioner module.

As used herein, the terms 'deconditioner module' or 'deconditioner' refers to a module for separating coarse packaging and other light residues from organic matter (Figure 2, (B)). An example of deconditioner includes the deconditioner described in WO2021/087597. This module can e.g., be part of a device for preparing an organic soup from organic waste material(s) upstream of the defatting unit according to the invention.

Returning the water-soluble fraction to a deconditioner module has two main advantages: first, it helps to remove the organic matter from the packaging materials, which means that cleaner packaging and higher organic matter extraction yields can be achieved. Secondly, it allows to adjust the dry matter content of the organic matter at the entry of the deconditioner module (which, otherwise, could be too high for the organic matter to be used in the subsequent steps) by re-cycling a liquid produced during the process in place of fresh water.

According to an even more specific embodiment, the present invention pertains to the preceding process wherein the yield of fat extraction is of at least 75%, preferably 80%, more preferably 90%.

By using the present method, the inventors have achieved fat extraction yields as high as 93%.

In addition, despite the high variability of the organic waste material(s) treated to obtain the organic soup, the fat extraction yield is stable. Therefore, one advantage of the method of the present invention is that it allows to consistently obtain high and stable yields for the extraction of fat.

An additional advantage of the method of the present invention is that, depending on the needs, fat extraction yield can be modulated, e.g. between 75 and 93%. This allows to obtain defatted organic soups with variable fat contents, depending on the intended use of these soups.

According to an even more specific embodiment, the present invention pertains to the preceding process, wherein:
- the concentration of water in the fat is less than 1 g/100g,
- the oleic acidity of the fat is less than 20%,
- the concentration of phosphorous in the fat is less than 50 mg/kg,
- the concentration of total nitrogen in the fat is less than 140 mg/kg,
- the concentration of sulfur in the fat is less than 20-30 mg/kg,
- the concentration of polyethylene (PE) in the fat is less than 80-100 mg/kg,
- the concentration of insoluble impurities in the fat is less than 0.5%.

As shown by the inventors in the experimental part below (Example 3), the analysis of the composition of the fat obtained with the method of the present invention demonstrates that it is possible to produce a fat that fully complies with the specifications expected by biodiesel and SAF manufacturers, for predictable reaction conditions and product quality.

The polyethylene (PE) content in the fat obtained according to the method of the invention is also in compliance with the SAF manufacturers specifications. However, depending on the destination of the fat, an additional filtration of the fat can be done to further reduce its PE content.

According to a specific embodiment, the present invention pertains to the preceding process, wherein the organic soup has been heated at about 70°C for at least 1 hour before step a).

This step is required when the organic soup has been obtained, in part or completely, from animal-derived biowaste such as animal by-products. According to the regulations on the treatment of biowaste of animal origin, these wastes must be heated at about 70°C for at least 1 hour to control the sanitary risk associated with the presence of certain pathogens present in animal-derived biowaste. This hygienization step is advantageously performed immediately before the organic soup is defatted, so that it is warm when entering the defatting unit, thus enabling a better phase separation.

According to a specific embodiment, the present invention pertains to the preceding process, wherein the organic soup has undergone a grinding step to split the initial organic waste material(s) into particles having a diameter less than about 12mm before step a).

The purpose of this optional step is to obtain a better extraction. This is because fat is more easily accessible when grinded organic matter is used.

Depending on the needs, the grinder can be regulated so as to split the initial organic waste material(s) into particles having a diameter significantly smaller than 12mm, e.g. 7mm.

According to a specific embodiment, the present invention pertains to the preceding process, wherein the organic soup after step c) comprises less than 0.3% of inerts.

Herein, the term 'inerts' refers to both light and heavy inerts.

According to this aspect of the invention, the defatted organic soup comprises less than 0.3% of inerts, preferably 0.05%, more preferably 0.01%.

According to a specific embodiment, the present invention pertains to the preceding process, wherein the fat is appropriate for use in biofuel industry, chemical industry, animal feed manufacturing, agriculture and energy production.

The fat extracted from biowaste according to the present invention can be destined to several applications. Thanks to its high quality, it can be processed to obtain a biofuel with the required characteristics. In addition, it can find applications in the chemical industry, for example for the synthesis of certain chemicals, it can be integrated into animal feed depending on the sanitary classification of the biowaste from which the fat has been extracted, it can be used in the agriculture sector, for energy production *etc.*

### EXAMPLES

Having generally described this invention, a further understanding can be obtained by reference to the following specific examples, which are provided herein for purposes of illustration only, and are not intended to limit the scope of the present invention.

### Example 1

A decanter manufactured and supplied by Flottweg (model Z6S) was installed within the DEFATTING UNIT according to the invention. The DEFATTING UNIT was connected downstream of an apparatus for preparing an organic soup from organic waste material(s), as described above and as depicted in Figure 1.

A number of tests were performed to determine the optimal operational parameters for the use of the decanter, such as the volume flow rate of the organic soup at the entry of the decanter, the rotational frequency of the rotating drum and of the screw.

These tests allowed to determine the optimal numerical values of the most important parameters for the use of the decanter in the device of the invention. In particular, satisfactory performance of the decanter was observed for a volume flow rate of about 10 m³/h and a rotational frequency of the decanter rotating drum and the screw of about 1208 and 25 rpm (revolutions per minute), respectively. In addition, it was determined that the recirculation of the fat from the physical separation device onto the decanter could be done at a volume flow rate at about 1 m³/h.

### Example 2

Table 1 shows the most relevant parameters measured on the organic soup obtained before hygienization and after hygienization and defatting using the device and method of the present invention.

More particularly, Table 1 shows the results of the analysis of three different organic soups, i.e. three organic soups obtained on different days from different organic waste materials (i.e., different in nature and proportion). Despite the variability of the initial organic waste materials, the results show that the yield of fat extraction is rather stable, which demonstrates that the method of the invention works can be applied to all types of biowaste. The inventors also observed that the period of the year (i.e., the season be it winter or summer, for example) does not have an impact on the physico-chemical characteristics of the fat and on the fat extraction yield.

The results of the analysis of the organic soup obtained before hygienization and after hygienization and defatting reported in Table 1 also show that the defatted organic soup still has a significant methanogenic power, as indicated by the BMP and the total CH₄ share. This shows that the defatted organic soup cannot be sent to waste but is imperative to treat it in an anaerobic digestor. Therefore, the defatted organic soup can be conveniently exploited for the production of biogas and digestate in an apparatus for anaerobic digestion.

In addition, the results reported in Table 1 demonstrate that the fat extraction yield that is possible to achieve with the device and method of the invention is significant (between 86 and 91% according to the results in Table 1). Even higher values, up to 93%, have been reached.

The results reported in Table 1 also demonstrate that the process of fat extraction is specific, i.e. only the fat is extracted, as other parameters such as the concentration of proteins, carbohydrates, the presence of fibers, ashes *etc.* are not impacted.

### Example 3

The analysis of the chemical composition of the fat obtained with the method of the present invention and reported in Table 2 demonstrates that it is possible to produce a fat that fully complies with the specifications expected by biodiesel and SAF manufacturers.

The quality of fat obtainable with the method of the present invention, as measured by the parameters indicated in Table 2, is higher with respect to the quality of the fat obtainable with the methods known in the art and currently employed by biofuel manufacturers. The higher quality of the fat obtainable with the method of the present invention has at least two advantages because it allows biofuel manufacturers to use it directly (i.e., without any further treatment) or to mix it with fat(s) of lower quality to achieve a biofuel with the required specifications.

**Table 1: Relevant parameters measured on different 'runs' of organic soup obtained before hygienization and after hygienization and defatting using the device and method of the present invention (*NL = norm liter, VS = volatile solids).**

| | | | **Run 1** | | **Run 2** | | **Run 3** | |
|---|---|---|---|---|---|---|---|---|
| **Parameter** | **Method** | **Unit** | **Before hygienization** | **After hygienization and defatting** | **Before hygienization** | **After hygienization and defatting** | **Before hygienization** | **After hygienization and defatting** |
| **BMP** | Calculated according to Baserga 1998-01 | NL CH₄/kg VS* | 116 | 80 | 130 | 78 | 132 | 73 |
| **Total CH₄ share** | Calculated according to Baserga 1998-01 | % | 62,2 | 57,9 | 62,2 | 57,5 | 62,8 | 57,2 |
| **Raw ash** | VO (EG) 152, Appendix III, C 2009-01 | % RM | 1,7 | 1,8 | 1,9 | 1,8 | 1,8 | 1,7 |
| **Raw protein** | VO (EG) 152, Appendix III, M 2009-01 | % RM | 4,7 | 5,1 | 4,8 | 4,8 | 4,8 | 4,5 |
| **Raw fat B** | VO (EG=) 152, Appendix III, H 2009-01 | % RM | 6,4 | 0,9 | 7,4 | 0,9 | 8 | 0,7 |
| **Fat yield extraction** | Calculated | % | 86% | | 88% | | 91% | |
| **Raw fiber** | VO (EG) 152 Appendix III, I 2009-01 | % RM | 0,7 | 0,8 | 0,7 | 0,8 | 0,7 | 0,8 |
| **Total carbohydrates** | Calculated | % RM | 6,7 | 8 | 7,5 | 8,1 | 6,9 | 7,6 |
| **Dry matter** | VO (EG) 152 Appendix III, A (external) 2009-01 | % RM | 20,2 | 16,7 | 22,4 | 16,3 | 22,3 | 15,3 |

**Table 2: Chemical composition of a 'run' of fat obtained with the method of the present invention and SAF manufacturers specifications for the measured values.**

| | | **Example of values from a specific run** | **SAF manufacturer specifications (max value)** |
|---|---|---|---|
| **Water** | g/100 g | 0,31 | 1 |
| **Iodine value** | g/100 g | 75 | |
| **Peroxyde value** | meq O₂/kg | 5,1 | |
| **Oleic acidity** | % | 4,3 | 20 |
| **Phosphorus** | mg/kg | 14,8 | 50 |
| **Total nitrogen** | mg/kg | < 0,10 | 140 |
| **Sulfur** | mg/kg | 26,2 | 20-30 |
| **Polyethylene** | mg/kg | 88 | 80-100 |
| **Insoluble impurities** | % | 0,13 | 0,5 |

### REFERENCES

"Biogas production and biogas potentials from residues of the european food and beverage industry", report funded by the European Union and published by the European Biogas Association (EBA) on 25/02/2015.

Anna Schnürer and Åsa Jarvis, "Microbiological Handbook for Biogas Plants", Swedish Waste Management U2009:03 Swedish Gas Centre Report 207, 2009.

## Claims

1. A device for extracting fat from an organic soup, comprising:
a) a phase separator module (610 or 610') configured to separate fat from materials of higher density present in the organic soup;
b) a light residues separation module (620), connected to the module of point a), comprising:
i. a first physical separation device (621) configured to separate the light residues from the fat,
ii. a press (622) configured to apply a pressure onto the light residues to collect the residual fat, or a second physical separation device (623), and means to convey the residual fat back to the phase separator module, and
c) a storage and sedimentation module (630), configured to allow the separation of fat from the residual fraction.

2. The device of claim 1, connected downstream of an apparatus for preparing an organic soup from organic waste material(s) and/or upstream of an anaerobic digester.

3. The device of any one of claims 1 or 2, wherein the phase separator module (610) comprises a centrifugal decanter.

4. The device of any one of claims 1 or 2, wherein the phase separator module (610') comprises a centrifugal tricanter.

5. The device of claim 3, comprising a metering valve configured to dose the water to be added to the defatted organic soup so that its fluidity is appropriate for its pumping.

6. A process for the treatment of organic waste, comprising a step of extracting fat from an organic soup produced from said organic waste and a step of methanization of the defatted soup to produce a biogas, wherein said step of extracting fat from an organic soup comprises:
a) separating fat from materials of higher density present in the organic soup by introducing the organic soup, previously heated at a temperature above 45°C, into a phase separator module as defined in claims 1, 3 or 4,
b) separating the light residues from the fat by means of a press (622) or of a second physical separation device (623), recovering the fat from the separated light residues and sending it back to the separation step in a), and
c) sedimenting the fat obtained in b) to separate it from the residual fraction.

7. The process of claim 6, wherein the separation module comprises a tricanter, so that step a) results in the separation of three phases: (i) fat and light residues, (ii) water-soluble fraction and (iii) water-insoluble fraction.

8. The process of claim 7, further comprising a step of mixing the water-insoluble fraction with part of the water-soluble fraction at the outlet of the tricanter to reach 20% dry matter.

9. The process of any one of claims 6 to 8, wherein the yield of fat extraction is of at least 75%, preferably 80%, more preferably 90%.

10. The process of any one of claims 6 to 9, wherein:
- the concentration of water in the fat is less than 1 g/100g,
- the oleic acidity of the fat is less than 20%,
- the concentration of phosphorous in the fat is less than 50 mg/kg,
- the concentration of total nitrogen in the fat is less than 140 mg/kg,
- the concentration of sulfur in the fat is less than 20-30 mg/kg,
- the concentration of polyethylene (PE) in the fat is less than 80-100 mg/kg,
- the concentration of insoluble impurities in the fat is less than 0.5%.

11. The process of any one of claims 6 to 10, wherein the organic soup has been heated at about 70°C for at least 1 hour before step a).

12. The process of any one of claims 6 to 11, wherein the organic soup has undergone a grinding step to split the initial organic waste material(s) into particles having a diameter less than about 12mm before step a).

13. The process of any one of claims 6 to 12, wherein the organic soup after step c) comprises less than 0.3% of inerts.

14. The process of any one of claims 6 to 13, wherein the fat is appropriate for use in biofuel industry, chemical industry, animal feed manufacturing, agriculture and energy production.

## Patentansprüche

1. Vorrichtung zum Extrahieren von Fett aus einer organischen Suppe, umfassend:
a) ein Phasentrennmodul (610 oder 610'), das so eingerichtet ist, dass es Fett von Materialien höherer Dichte, die in der organischen Suppe vorhanden sind, trennt;
b) ein Modul zum Abtrennen leichter Rückstände (620), das mit dem Modul von Punkt a) verbunden ist und Folgendes umfasst:
i. eine erste physikalische Trennvorrichtung (621), die so eingerichtet ist, dass sie die leichten Rückstände vom Fett trennt,
ii. eine Presse (622), die so eingerichtet ist, dass sie einen Druck auf die leichten Rückstände ausübt, um das Restfett aufzufangen, oder eine zweite physische Trennvorrichtung (623) und Mittel, um das Restfett zurück zum Phasentrennmodul zu befördern, und
c) ein Speicher- und Sedimentationsmodul (630), das so eingerichtet ist, dass es die Abtrennung von Fett von der Restfraktion ermöglicht.

2. Vorrichtung nach Anspruch 1, die nach einer Vorrichtung zur Zubereitung einer organischen Suppe aus organischem(n) Abfallmaterial(ien) und/oder vor einem anaeroben Fermenter angeschlossen ist.

3. Vorrichtung nach einem der Ansprüche 1 oder 2, wobei das Phasentrennmodul (610) einen Zentrifugaldekanter umfasst.

4. Vorrichtung nach einem der Ansprüche 1 oder 2, wobei das Phasentrennmodul (610') einen Zentrifugal-Trikanter umfasst.

5. Vorrichtung nach Anspruch 3, umfassend ein Dosierventil, das so eingerichtet ist, dass es das der entfetteten organischen Suppe hinzuzufügende Wasser dosiert, sodass ihre Fließfähigkeit für ihr Pumpen geeignet ist.

6. Verfahren zur Behandlung organischer Abfälle, umfassend einen Schritt des Extrahierens von Fett aus einer aus den organischen Abfällen hergestellten organischen Suppe und einen Schritt der Methanisierung der entfetteten Suppe zum Herstellen eines Biogases, wobei der Schritt des Extrahierens von Fett aus einer organischen Suppe Folgendes umfasst:
a) Abtrennen des Fetts von den Materialien höherer Dichte, die in der organischen Suppe vorhanden sind, indem die zuvor auf eine Temperatur von über 45 °C erhitzte organische Suppe in ein Phasentrennmodul nach den Ansprüchen 1, 3 oder 4 eingeführt wird,
b) Abtrennen der leichten Rückstände vom Fett mittels einer Presse (622) oder einer zweiten physikalischen Trennvorrichtung (623), wobei das Fett aus den abgetrennten leichten Rückständen gewonnen und zurück in den Trennschritt in a) geführt wird, und
c) Sedimentieren des in b) erhaltenen Fetts, um es von der Restfraktion zu trennen.

7. Verfahren nach Anspruch 6, wobei das Trennmodul einen Trikanter umfasst, sodass Schritt a) zur Trennung von drei Phasen führt: (i) Fett und leichte Rückstände, (ii) wasserlösliche Fraktion und (iii) wasserunlösliche Fraktion.

8. Verfahren nach Anspruch 7, das ferner einen Schritt des Mischens der wasserunlöslichen Fraktion mit einem Teil der wasserlöslichen Fraktion am Ausgang des Trikanters umfasst, um 20 % Trockensubstanz zu erreichen.

9. Verfahren nach einem der Ansprüche 6 bis 8, wobei der Ertrag der Fettextraktion mindestens 75 %, vorzugsweise 80 %, noch bevorzugter 90 %, beträgt.

10. Verfahren nach einem der Ansprüche 6 bis 9, wobei:
- die Wasserkonzentration im Fett weniger als 1 g/100 g beträgt,
- der Ölsäuregehalt des Fetts weniger als 20 % beträgt,
- die Phosphorkonzentration im Fett weniger als 50 mg/kg beträgt,
- die Gesamtkonzentration an Stickstoff im Fett weniger als 140 mg/kg beträgt,
- die Schwefelkonzentration im Fett weniger als 20-30 mg/kg beträgt,
- die Konzentration von Polyethylen (PE) im Fett weniger als 80-100 mg/kg beträgt,
- die Konzentration unlöslicher Verunreinigungen im Fett weniger als 0,5 % beträgt.

11. Verfahren nach einem der Ansprüche 6 bis 10, wobei die organische Suppe vor Schritt a) mindestens 1 Stunde lang bei etwa 70 °C erhitzt wurde.

12. Verfahren nach einem der Ansprüche 6 bis 11, wobei die organische Suppe vor Schritt a) einem Mahlschritt unterzogen wurde, um das/die anfängliche(n) organische(n) Abfallmaterial(ien) in Partikel mit einem Durchmesser von weniger als etwa 12 mm aufzuspalten.

13. Verfahren nach einem der Ansprüche 6 bis 12, wobei die organische Suppe nach Schritt c) weniger als 0,3 % inerter Stoffe umfasst.

14. Verfahren nach einem der Ansprüche 6 bis 13, wobei das Fett für die Verwendung in der Biokraftstoffindustrie, der chemischen Industrie, der Futtermittelherstellung, der Landwirtschaft und der Energieerzeugung geeignet ist.

## Revendications

1. Dispositif d'extraction de matières grasses d'une soupe organique, comprenant :
a) un module séparateur de phase (610 ou 610') conçu pour séparer les matières grasses de matières de densité plus élevée présentes dans la soupe organique ;
b) un module de séparation de résidus légers (620), connecté au module du point a), comprenant :
i. un premier dispositif de séparation physique (621) conçu pour séparer les résidus légers des matières grasses,
ii. une presse (622) conçue pour appliquer une pression sur les résidus légers pour collecter les matières grasses résiduelles, ou un second dispositif de séparation physique (623), et des moyens pour transporter les matières grasses résiduelles vers le module séparateur de phase, et
c) un module de stockage et de sédimentation (630), conçu pour permettre la séparation des matières grasses de la fraction résiduelle.

2. Dispositif selon la revendication 1, connecté en aval d'un appareil pour la préparation d'une soupe organique à partir de matière(s) organique(s) résiduelle(s) et/ou en amont d'un digesteur anaérobie.

3. Dispositif selon l'une quelconque des revendications 1 ou 2, dans lequel le module séparateur de phase (610) comprend un décanteur centrifuge.

4. Dispositif selon l'une quelconque des revendications 1 ou 2, dans lequel le module séparateur de phase (610') comprend un tricanter centrifuge.

5. Dispositif selon la revendication 3, comprenant une valve doseuse configurée pour doser l'eau devant être ajoutée à la soupe organique dégraissée de sorte que sa fluidité soit appropriée à son pompage.

6. Procédé de traitement de déchets organiques, comprenant une étape d'extraction de matières grasses d'une soupe organique produite à partir desdits déchets organiques et une étape de méthanisation de la soupe dégraissée pour produire un biogaz, dans lequel ladite étape d'extraction de matières grasses d'une soupe organique comprend :
a) la séparation de matières grasses de matières de densité plus élevée présentes dans la soupe organique en introduisant la soupe organique, préalablement chauffée à une température supérieure à 45 °C, dans un module séparateur de phase tel que défini dans les revendications 1, 3 ou 4,
b) la séparation des résidus légers des matières grasses au moyen d'une presse (622) ou d'un second dispositif physique de séparation (623), la récupération des matières grasses à partir des résidus légers séparés et leur renvoi vers l'étape de séparation en étape a), et
c) la sédimentation des matières grasses obtenues en étape b) pour leur séparation de la fraction résiduelle.

7. Procédé selon la revendication 6, dans lequel le module de séparation comprend un tricanter, de sorte que l'étape a) entraîne la séparation de trois phases : (i) les résidus gras et légers, (ii) la fraction soluble dans l'eau et (iii) la fraction insoluble dans l'eau.

8. Procédé selon la revendication 7, comprenant en outre une étape de mélange de la fraction insoluble dans l'eau avec une partie de la fraction soluble dans l'eau au niveau de la sortie du tricanter pour atteindre 20 % de matière sèche.

9. Procédé selon l'une quelconque des revendications 6 à 8, dans lequel le rendement d'extraction de matières grasses est d'au moins 75 %, de préférence de 80 %, plus préférentiellement de 90 %.

10. Procédé selon l'une quelconque des revendications 6 à 9, dans lequel :
- la concentration en eau dans les matières grasses est inférieure à 1 g/100 g,
- l'acidité oléique des matières grasses est inférieure à 20 %,
- la concentration en phosphore dans les matières grasses est inférieure à 50 mg/kg,
- la concentration en azote total dans les matières grasses est inférieure à 140 mg/kg,
- la concentration en soufre dans les matières grasses est inférieure à 20-30 mg/kg,
- la concentration en polyéthylène (PE) dans les matières grasses est inférieure à 80-100 mg/kg,
- la concentration en impuretés insolubles dans les matières grasses est inférieure à 0,5 %.

11. Procédé selon l'une quelconque des revendications 6 à 10, dans lequel la soupe organique a été chauffée à environ 70 °C pendant au moins 1 heure avant l'étape a).

12. Procédé selon l'une quelconque des revendications 6 à 11, dans lequel la soupe organique a subi une étape de broyage pour diviser le(s) déchet(s) organique(s) initial(aux) en particules présentant un diamètre inférieur à environ 12 mm avant l'étape a).

13. Procédé selon l'une quelconque des revendications 6 à 12, dans lequel la soupe organique après l'étape c) comprend moins de 0,3 % de matières inertes.

14. Procédé selon l'une quelconque des revendications 6 à 13, dans lequel les matières grasses conviennent à une utilisation dans l'industrie des biocarburants, l'industrie chimique, la fabrication d'aliments pour animaux, l'agriculture et la production d'énergie.
